# EUROPEAN PATENT APPLICATION

(11) **EP 3 751 168 A1**
(43) Date of publication of application: **16.12.2020**
(21) Application number: 19192386.1
(22) Date of filing: 19.08.2019
(51) Int. Cl.: F16D 65/12, F16D 65/78, F16D 65/84

(54) **CAST IRON AND CERAMIC COMPOSITE DISC BRAKE**

(30) Priority: 13.06.2019 CN 201920888037 U
(71) Applicant: Laizhou Baoyi Machinery Co., Ltd., 261413 Laizhou City Shandong (CN)
(72) Inventor: LOU, Xiaobin, Laizhou City, Shandong 261413 (CN)
(74) Representative: ZHAOffice SPRL

(57) **Abstract**

A cast iron and ceramic composite disc brake includes a brake surface, wherein the brake surface is provided with a plurality of annularly arranged grooves in a circular direction, the annularly arranged groove is provided with a filler, and the filler is made of a ceramic resin fiber. In the present disclosure, the gray cast iron and the ceramic fiber resin material are composited under a high pressure, which greatly reduces the weight, greatly increases a friction coefficient, and shortens a braking distance by 1/3. Moreover, the installation is convenient, and the heat dissipation performance and the heat resistance performance are better, which is safe and reliable to use.

## Description

### Cross Reference to the Related Applications

This application is based upon and claims priority to Chinese Patent Application No. 201920888037.0, filed on June 13, 2019, the entire contents of which are incorporated herein by reference.

### Technical Field

The present disclosure relates to the technical field of automotive parts, in particular to a cast iron and ceramic composite disc brake.

### Background

A brake system on an automobile generally employs a disc or a drum system. The disc brake system performs better over the braking effect and is convenient to maintain than the drum brake system. Therefore, the ratio of using the disc brake system is over 80%. The disc brake of the disc brake system is a vital part of the disc brake system. Simply put, the disc brake is a circular disc and it rotates with the movement of the automobile. When a brake pedal is pressed, the brake clamps the disc brake to generate a braking force, which takes effect in slowing down or stopping the automobile.

Automotive braking performance directly affects the driving safety of the automobile. The common disc brake is manufactured by successively employing a gray cast iron casting process and the numerical control machining, which has a braking friction coefficient of about 0.35. Further, the disc brake is prone to getting overheated during the high-speed braking, thereby causing a brake fade, a long braking distance, and a degraded braking performance.

### Summary

In order to resolve the above-mentioned technical issues, the present disclosure provides a cast iron and ceramic composite disc brake, which addresses the issues that the disc brake is prone to getting overheated and the brake coefficient is relatively low in the prior art.

To this end, the technical solutions of the present disclosure is as follows.

The cast iron and ceramic composite disc brake includes a brake surface, wherein the brake surface is provided with a plurality of annularly arranged grooves in a circular direction, each annularly arranged groove is provided with a filler, and the filler is made of a resin fiber ceramic material.

Preferably, an end surface of the filler is polished to be flush with the brake surface on a same horizontal plane.

Preferably, cross-sectional shapes of the annularly arranged grooves are rounded rectangles.

Preferably, a same angle is formed between two adjacent rounded rectangles.

Preferably, the cross-sectional shapes of the annularly arranged grooves are circular.

Preferably, the annularly arranged grooves are uniformly arranged on the brake surface.

Based on the above technical solution, the present disclosure has the following advantages. In the present disclosure, the resin fiber ceramic is embedded in the cast iron disc brake. Since the resin fiber ceramic is fibrous, light and refractory material with the advantages of a light weight, a high-temperature resistance performance, a good heat stability, a low thermal conductivity, a low specific heat, and a mechanical vibration resistance performance, the disc brake is integrally composited by the gray cast iron and the resin fiber ceramic under a high pressure. As a result, an overall weight of the disc brake is enormously reduced and the friction coefficient is enormously increased, so as to shorten a braking distance by 1/3 during braking the automobile. In this way, the installation is convenient, and the heat dissipation performance and the heat resistance performance are better.

### Brief Description of the Drawings

FIG. 1 is a schematic view showing an overall structure of a cast iron and ceramic composite disc brake of the present disclosure;
FIG. 2 is a sectional view of Embodiment 1 taken on the line N-N of FIG. 1; and
FIG. 3 is a sectional view of Embodiment 2 taken on the line N-N of FIG. 1.

In the figures: 1, brake surface, 2, annularly arranged groove.

### Brief Description of the Drawings

The technical solutions of the embodiments of the present disclosure are described clearly and completely hereinafter with reference to the drawings in the embodiments of the present disclosure.

### Embodiment 1

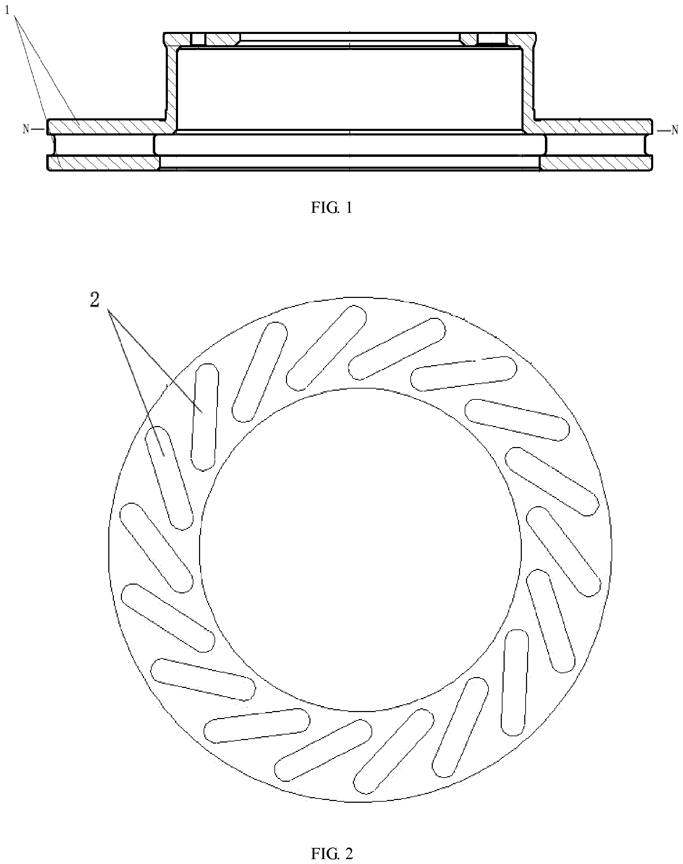

As shown in FIG. 1 and FIG. 2, the present disclosure provides a cast iron and ceramic composite disc brake, including the brake surface 1.

First, a work blank is made by smelting and pouring a pig iron at a high temperature (1600°C), and then the work blank is made into a disc brake body through a numerical control machining process. Since the used material is covered by the prior art, it is not further illustrated in this embodiment.

Subsequently, a plurality of the annularly arranged grooves 2 are formed on the brake surfaces 1 on both sides of the disc brake body by a numerical control machining center. The annularly arranged grooves 2 are uniformly arranged on the brake surface 1. Cross-sectional shapes of the annularly arranged grooves 2 are rounded rectangles. The same angle is formed between two rounded rectangles . An end of each rounded rectangle faces towards an inner circle of the brake surface 1, and the other end of the rounded rectangles faces towards an outer circle of the brake surface 1. A centerline of the rounded rectangle and a tangent line of an outer circle of the brake surface 1 form an angle ranging from 30° to 75°.

After that, the ceramic fiber mixed with the resin is added into the empty grooves, and then is compactly compressed by a large tonnage press machine, meanwhile being heated up to 170°C. Consequently, the resin of mixed material is melted, and then the resin is cooled down and solidified spontaneously.

Finally, the filler on both sides of the disc brake is polished by a numerical control grinding machine to make an end surface of the filler flush with the brake surface 1 on a same horizontal plane for ensuring parallelism.

The present disclosure provides the cast iron and ceramic composite disc brake, wherein the disc body is integrally composited by the gray cast iron and the ceramic fiber material under a high pressure, which greatly reduces the weight, greatly increases a friction coefficient, and shortens a braking distance by 1/3. Moreover, the installation is convenient, and the heat dissipation performance and the heat resistance performance are better, which is safe and reliable to use.

### Embodiment 2

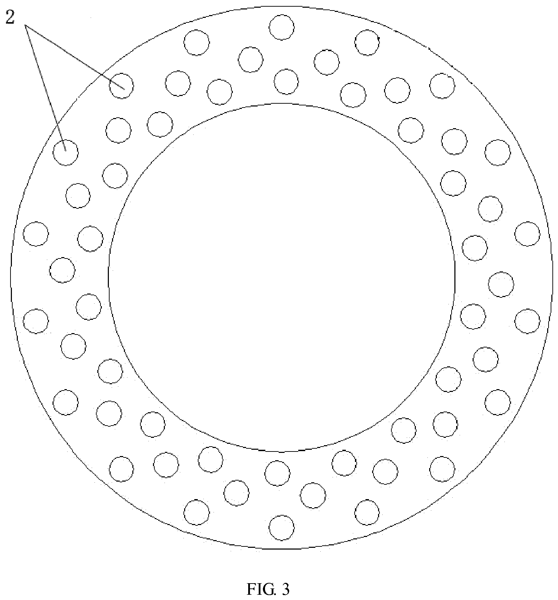

As shown in FIG. 1 and FIG. 3, the present disclosure provides the cast iron and ceramic composite disc brake which includes the brake surface 1.

First, the work blank is made by smelting and pouring the pig iron at the high temperature (1600°C), and then the work blank is made into the disc brake body through the numerical control machining process. Since the used material is covered by the prior art, it is not further illustrated in this embodiment;

Subsequently, a plurality of the annularly arranged grooves 2 are formed on the brake surface 1 on the both sides of the disc brake body by the numerical control machining center. The cross-sectional shapes of the annularly arranged grooves 2 are circular. The annularly arranged grooves 2 are uniformly arranged on the brake surface 1.

After that, the ceramic fiber mixed with the resin is added into the empty grooves, and then is compactly compressed by the large tonnage press machine, meanwhile being heated up to 170°C. Consequently, the resin of the mixed material is melted, and then the resin is cooled down and solidified spontaneously.

Finally, the filler in both sides of the disc brake is polished by the numerical control grinding machine to make the end surface of the filler flush with the brake surface 1 on the same horizontal plane for ensuring parallelism.

The present disclosure provides the cast iron and ceramic composite disc brake, wherein the disc body is integrally composited by the gray cast iron and the ceramic fiber material under a high pressure, greatly reduces the weight, greatly increases the friction coefficient, and shortens the braking distance by 1/3. Moreover, the installation is convenient, and the heat dissipation performance and the heat resistance performance are better, which is safe and reliable to use.

The above-mentioned descriptions are merely the preferred embodiments of cast iron and ceramic composite disc brake according to the present disclosure, rather than limiting the scope of the present disclosure. Any equivalent structure or process transformation made by using the contents of the specification of the present disclosure derived from the description of the present disclosure, directly or indirectly applied to other related technical fields, should be considered as falling within the scope of the present disclosure in a similar way.

## Claims

1. A cast iron and ceramic composite disc brake, comprising: a brake surface, wherein the brake surface is provided with a plurality of annularly arranged grooves in a circular direction, each annularly arranged groove is provided with a filler, and the filler is made of a ceramic resin fiber.

2. The cast iron and ceramic composite disc brake according to claim 1, wherein an end surface of the filler is polished to be flush with the brake surface on a same horizontal plane.

3. The cast iron and ceramic composite disc brake according to claim 1, wherein cross-sectional shapes of the annularly arranged grooves are rounded rectangles.

4. The cast iron and ceramic composite disc brake according to claim 3, wherein a same angle is formed between two rounded rectangles.

5. The cast iron and ceramic composite disc brake according to claim 1, wherein cross-sectional shapes of the annularly arranged grooves are circular.

6. The cast iron and ceramic composite disc brake according to claim 1, wherein the annularly arranged grooves are uniformly arranged on the brake surface.

7. The cast iron and ceramic composite disc brake according to claim 2, wherein the annularly arranged grooves are uniformly arranged on the brake surface.

8. The cast iron and ceramic composite disc brake according to claim 3, wherein the annularly arranged grooves are uniformly arranged on the brake surface.

9. The cast iron and ceramic composite disc brake according to claim 4, wherein the annularly arranged grooves are uniformly arranged on the brake surface.

10. The cast iron and ceramic composite disc brake according to claim 5, wherein the annularly arranged grooves are uniformly arranged on the brake surface.
